(19) Europäisches Patentamt
European Patent Office
Office européen des brevets

(11) Publication number: 0 044 017
A1

(12) **EUROPEAN PATENT APPLICATION**

(21) Application number: 81105257.0

(51) Int. Cl.³: C 09 K 11/42

(22) Date of filing: 07.07.81

(30) Priority: 14.07.80 US 167853

(43) Date of publication of application: 20.01.82 Bulletin 82/3

(84) Designated Contracting States: DE FR GB IT NL

(71) Applicant: GTE Products Corporation
100 West 10th Street
Wilmington Delaware(US)

(72) Inventor: Shaffer, Francis N.
104 North Main Street
Towanda Pennsylvania 18848(US)

(74) Representative: Reinländer & Bernhardt Patentanwälte
Orthstrasse 12
D-8000 München 60(DE)

(54) **Gamma phase manganese activated zinc-magnesium orthophosphate cathode ray phosphor and monitor cathode ray tube screen employing same.**

(57) Bright, red-orange emitting, long-persistence cathode ray phosphor having the formula:

$$(Zn_{1-x-y}Mg_xMn_y)_{3+z}(PO_4)_2$$

are useful in monitor cathode ray tubes for data display.

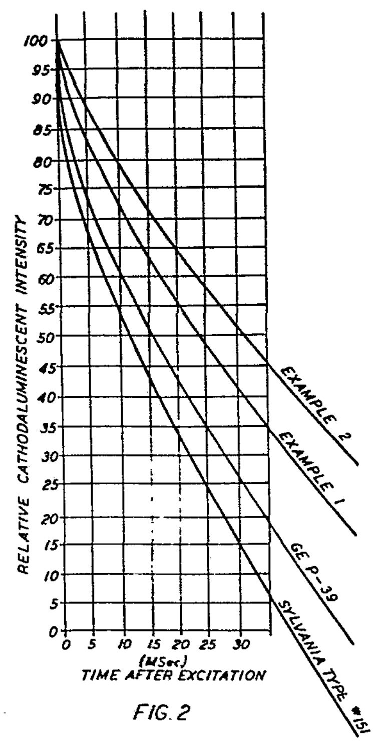


FIG. 2

EP 0 044 017 A1

Croydon Printing Company Ltd.

# GAMMA PHASE MANGANESE ACTIVATED ZINC-MAGNESIUM ORTHOPHOSPHATE CATHODE RAY PHOSPHOR AND MONITOR CATHODE RAY TUBE SCREEN EMPLOYING SAME

## BACKGROUND OF THE INVENTION

This invention relates to a monitor cathode ray tube phosphor and screen, and more particularly relates to such a screen containing a long-persistence, reddish-orange emitting zinc-magnesium orthophosphate phosphor.

Monitor cathode ray tubes, used for example, in the static or dynamic display of computer input or output data, are typically operated at a frequency less than the 60 Hertz (U.S.) or 50 Hertz (European) of conventional cathode ray tube video displays. Such monitor displays are typically operated at 30 Hertz, enabling the handing of up to twice as much data for a given computer memory capacity as would be possible with conventional video displays.

Such lower operating frequencies require the use of cathode ray phosphors having longer persistence in order to avoid "flicker" of the display, i.e., the appearance of a cyclic change in brightness corresponding to the frequency of operation. Such long-persistence phosphors should also have good "burn resistance" (i.e., capable of withstanding prolonged cathode ray excitation without degradation) and chemical stability (capable of withstanding wetting and drying during post-fire phosphor processing and during cathode ray tube screen processing).

J. 71. 8-80

Manganese, arsenic-activated zinc orthosilicate is a long-persistence, green-emitting CRT phosphor which has been widely used for monitor screens. There has been a lack of satisfactory long persistence CRT phosphors emitting in colors other than green.

Furthermore, phosphors having even longer persistence than that of zinc orthosilicate could enable further reductions in the frequency of operation of the screens, and consequent further increases in efficiency of utilization of associated memory capacity.

Zinc orthophosphate acivated by divalent manganese $Zn_3(PO_4)_2:Mn^{2+}$ has been known as a cathode ray phosphor for some time. Substitutions of tin, barium and strontium were made to alter the excitation and emission characteristics. See U.S. patents 2,723,958 and 2,776,261, issued to F.N. Shaffer et al. in 1955 and 1957, respectively.

The effect of magnesium substitution on crystal structure has also been studied. In "Phase Equilibria In $Zn_3(PO_4)_2$ - $Mg_3(PO_4)_2$", J. Electrochem. Soc., Vol. 106, No.11, Nov., 1959, pp. 960-963, J. F. Sarver et al. showed that in the solid solution series between $Zn_3(PO_4)_2$ and $Mg_3(PO_4)_2$, the $Mg_3(PO_4)_2$ crystal structure gamma phase appeared at the substitution of about two mole percent of Mg for Zn, and was the only phase observed as Mg substitution increased from 5 to 100 mole percent (p. 963). Relative brightness of these phosphors activated by $Mn^{2+}$ was highest at 5 to 10 mole percent Mg.

In "The Crystal Structure of and Luminescence of gamma-Zinc Ortho-Phosphate", J. Phys. Chem. Solids, Vol. 24, pp. 141-149, Pergamon Press, 1963, C. Calvo reported the existence of the gamma phase in $(Zn, Mg)_3(PO_4)_2$ for all compositions above thirty three mole percent Mg (p.149).

J.M.S.
7-8-80

BAD ORIGINAL

In "Cathodoluminescence of $(Zn+Mg)_3\ (PO_4)_2:Mn^{2+}$", J. Electrochem. Soc., Vol. 127, No. 2, Feb., 1980, pp. 503-505, W. Lehmann noted that the Mn-activated zinc, magnesium orthophosphate cathode ray phosphor having equal mole percents of Zn and Mg and the gamma structure, exhibited long decay times.

## SUMMARY OF THE INVENTION

In accordance with the invention, a chemically stable bright, reddish-orange emitting, long persistence cathode ray phosphor exhibiting the gamma phase magnesium orthophosphate crystal structure, has the molar formula:

$$(Zn_{1-x-y}Mg_xMn_y)_{3+z}(PO_4)_2,$$

where:

$x = 0$ to $0.20$

$y = 0.01$ to $0.04$, and

$z = 0.05$ to $0.2$.

According to one aspect of the invention, the slight excess of total cations over the theoretical stoichiometric amount (the excess represented by z), enables increased brightness of this mainly gamma phase cathode ray composition over stoichiometric compositions.

According to a preferred embodiment, $z = 0.10$ to $0.15$, wherein cathode ray brightness of the phosphor is further optimized.

According to another preferred embodiment, x is at least 0.03, the presence of Mg in such amounts stabilizing the gamma structure, thus enabling less critical control of firing temperature to form the phosphor.

According to still another preferred embodiment, x is from 0.05 to 0.15 to insure that the composition is substantially completely gamma phase, regardless of firing temperature.

Also in accordance with the invention, a monitor cathode ray tube screen comprises a faceplate and an array of elemental areas supported by the faceplate,

J. M. S.
7-8-80

the elemental areas comprising a photosensitive matrix material supporting cathode ray phosphor particles dispersed therein, at least some of which phosphor particles are a composition of the invention.

## BRIEF DESCRIPTION OF THE DRAWING

Figure 1 is a section view of a cathode ray tube faceplate 10 supporting a plurality of elemental areas 11, each area comprising a plurality of cathode ray tube phosphor particles including particles of the phosphor of this invention supported in a photosensitive matrix; and

Figure 2 is a graph of relative intensity of cathodoluminsecent emission versus time after excitation (microseconds) for several phosphor compositions including the phosphor of this invention.

## DETAILED DESCRIPTION OF THE INVENTION

Referring now to Figure 1, there is shown an article of manufacture, a monitor cathode ray tube screen including an array of elemental areas (eg., dots, strips or stripes) of a photosensitive matrix material, such as dichromated polyvinyl alcohol photoresist, supporting phosphor particles, the array supported by a screen substrate such as a cathode ray tube faceplate. Such elemental areas are preferably formed by exposing an integral photoresist layer selectively with a pattern of light corresponding to the pattern desired to be formed on the faceplate. Subsequently, a developer removes the unexposed portions of the photoresist including the phosphor particles supported therein, and leaves the areas which had been insolubilized to the developer by the light exposure.

The screen may be monochrome, in which all areas in the array contain particles of the same phosphor or phosphor mixture, or may be polychrome, in which adjacent areas contain different phosphors or phosphor mixtures.

J.M.S.
7-8-80

An example of such a polychrome screen is a tri-dot screen, analogous to the well-known tri-dot color screen for color television, in which the array comprises a repetitive pattern of adjacent red, blue and green dots.

At least some of the phosphor particles utilized in such a monitor screen must exhibit long persistence, in addition to acceptable color and brightness of emission. Persistence must be sufficiently long to prevent undesirable flicker between cycles.

Such a long-persistence phosphor is the manganese-activated zinc-magnesium orthophosphate phosphor of this invention having the gamma phase crystal structure. As is known, depending upon the temperature of formation, the mainly zinc-containing phosphors preferentially assume one of three crystal structures; alpha phase (low temperature, green-emitting), gamma phase (intermediate temperature, reddish-orange emitting), and beta phase (high temperature, red-emitting).

As magnesium is substituted for zinc, the gamma structure becomes preferred. Thus, at values of $x=0$ the starting material mixtures should be fired at a temperature within the range of about 890°C to 910°C in order to obtain mainly gamma phase, while at x values of at least 0.02, firing may range from about 970°C to 990°C.

Compositions formulated at about stoichiometric total Zn plus Mn cations, or Zn plus Mg plus Mn cations, (Where z equals 0.0), to form on a fired basis the orthophosphate are not chemically stable in that they hydrolize to a weakly acid pH in water suspension to form, when wetted and then dried, the nonluminescent hydrated orthophosphate form. Similar compositions, except formulated at a slight excess over the theoretical stoichiometric cations required to form on fired basis the orthophosphate, ($z = 0.05$) hydrolize to a weakly basic pH in water and retain, when wetted and then dried

during post-fire phosphor processing and during cathode ray tube screen processing, the anhydrous orthophosphate form with close to the as-fired cathodoluminescence brightness level.

EXAMPLE I

In one embodiment of the invention a long-persistence, reddish-orange emitting, cathodoluminescent phosphor zinc orthophosphate with mainly gamma phase crystal structure was prepared having the following composition:

| | |
|---|---|
| Zinc | 3.05 gram atoms |
| Manganese | 0.05 gram atoms |
| Phosphate($PO_4$) | 2.00 gram moles |

In making the phosphor the starting ingredients are combined and blended together in the following proportions:

| | |
|---|---|
| Zinc Ammonium Phosphate | 535.0 grams |
| Zinc Oxide | 128.2 grams |
| Manganeous Carbonate (45.17 % Mn) | 9.1 grams |

The above mixture is hammermilled and then blended to a homogeneous, finely divided powder form. It is then converted to the phosphor state by firing in an open quartz tray 10 inches long by 6 inches wide by 2 inches deep for 5 hours at 900 °C in the ambient atmosphere of an electric glo-bar furnace. When cool, the phosphor product may be post-fire treated, if desired.

EXAMPLE II

In another embodiment of the invention, a magnesium-modified, long-persistence, reddish-orange emitting, cathodoluminescent zinc orthophosphate phosphor with gamma phase crystal structure is prepared having the following composition:

| | |
|---|---|
| Zinc | 2.80 gram atoms |
| Magnesium | 0.30 gram atoms |
| Manganese | 0.05 gram atoms |
| Phosphate ($PO_4$) | 2.00 gram moles |

F.M.S.
7-8-80

In making the phosphor, the starting ingredients are combined and blended together in the following proportions:

| | |
|---|---|
| Zinc Ammonium Phosphate | 536.00 grams |
| Zinc Oxide | 97.65 grams |
| Magnesium Oxide | 18.15 grams |
| Manganeous Carbonate (45.17 % Mn) | 9.10 grams |

The above mixture is processed by the procedure of Example I, except that firing was carried out at 980°C.

In Table I are cathodoluminescent color and brightness data measured in a demountable cathode ray tube, comparing Example 1 and Example 2 phosphors with a commercial General Electric P-39 (green-emitting $Zn_2SiO_4$:Mn,As) phosphor and a commercial (Sylvania Type #151) red-emitting $Zn_3(PO_4)_2$:Mn phosphor.

F.N.S.
7-8-80

-22,715

TABLE I

| Phosphor | Settled Screens | | Emission (Cathode Ray Excitation) | | |
|---|---|---|---|---|---|
| | Screen Wt. milligrams per square centimeter | Transmission% | Chromaticity(x,y values) x | y | Brightness |
| $(Zn,Mn)_{3+x}(PO_4)_2$ Example 1 (Mainly gamma) | 3.2 | 20. | 640 | 353 | 41.7 |
| $(Zn,Mg,Mn)_{3+x}(PO_4)_2$ Example 2 (gamma). | 3.2 | 18. | 652 | 342 | 42.9 |
| $(Zn,Mn)_{3+x}(PO_4)_2$ Sylvania Type #151 (beta) | 3.4 | 19. | 664 | 331 | 37.8 |
| $Zn_2SiO_4$:Mn,As GE P-39 | 2.6 | 20. | 206 | 702 | 100.0 |

F.M.S.
7-8-80

As may be seen from Table I, the compositions of the Examples exhibit brightnesses of from about 10 to 13 percent greater than that of the beta phase composition.

The relative persistence of the samples of Table I, obtained by measuring the relative intensity of cathodoluminescent emission at set intervals after excitation, is presented graphically in Fig. 2. As may be seen, the Example 2 composition has the highest persistence (slowest decay rate), followed by the Example 1 composition, then the P-39 standard, and finally the beta phase composition.

While there has been shown and described what are at present considered the preferred embodiments of the invention, it will be obvious to those skilled in the art that various changes and modifications may be made therein without departing from the scope of the invention as defined by the appended claims.

INDUSTRIAL APPLICABILITY

Bright, red-orange emitting, long-persistence cathode ray phosphors having the formula:

$$(Zn_{1-x-y}Mg_xMn_y)_{3+z}(PO_4)_2$$

are useful in monitor cathode ray tubes for data display.

J. M. S.
7-8-80

CLAIMS

1. Cathode ray phosphor comprising a bright, reddish-orange-emitting, long-persistence composition having a crystallographic structure comprising the magnesium orthophosphate gamma phase, and having the molar formula:

$$(Zn_{1-x-y}Mg_xMn_y)_{3+z}(PO_4)_z$$

where:

x = 0 to 0.20
y = 0.01 to 0.04, and
z = 0.05 to 0.20

2. Composition of Claim 1 wherein x is at least 0.03, and the structure consists essentially of gamma phase.

3. Composition of Claim 2 wherein x is from 0.05 to 0.15.

4. Composition of Claim 1 wherein z = 0.10 to 0.15.

5. Monitor cathode ray tube screen comprising a faceplate and an array of elemental areas on the faceplate, at least a portion of elemental areas comprising particles of at least one cathode ray phosphor distributed in a photosensitive matrix, characterized in that the phosphor is a bright, reddish-orange-emitting, long-persistence phosphor having a crystallographic structure comprising the magnesium orthophosphate gamma phase and having the molar formula:

$$(Zn_{1-x-y}Mg_xMn_y)_{3+z}(PO_4)_2;$$

where:

x = 0 to 0.20
y = 0.01 to 0.04, and
z = 0.05 to 0.20

6. Screen of Claim 5 wherein x is at least 0.03, and the structure consists essentially of gamma phase.

7-8-80

,715

7. Screen of Claim 6 wherein x is from 0.05 to 0.15.

8. Screen of Claim 5 wherein z = 0.10 to 0.15.

9. Screen of Claim 5 wherein at least a portion of the elemental areas additionally comprises a green-emitting manganese-arsenic activated zinc orthosilicate.

Francis N. Shaffer

F. N. S.

-22,715 7-8-80

1/1

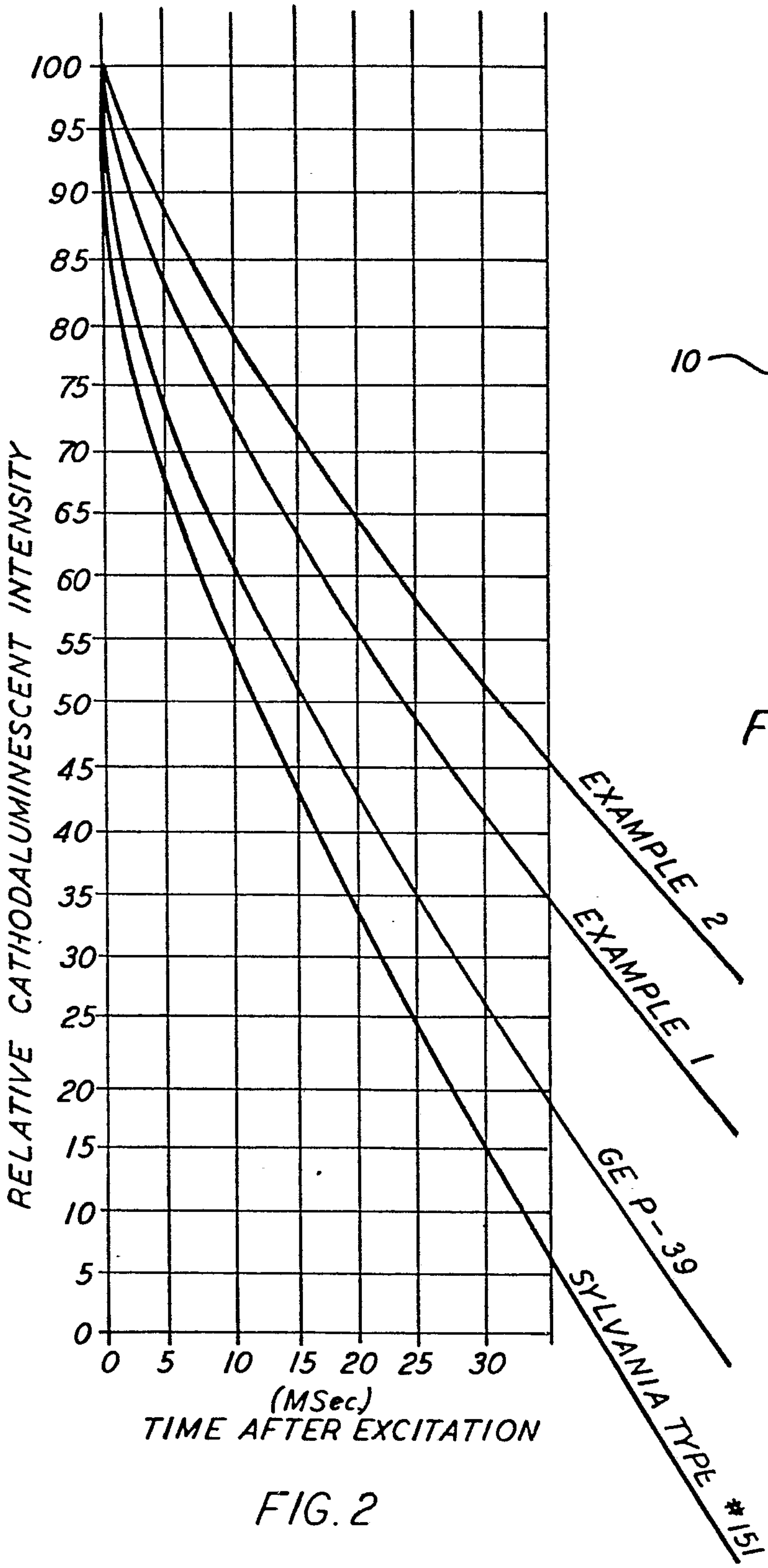

100
95
90
85
80
75
70
65
60
55
50
45
40
35
30
25
20
15
10
5
0
RELATIVE CATHODALUMINESCENT INTENSITY
0
5
10
15
20
25
30
(MSec.)
TIME AFTER EXCITATION
EXAMPLE 2
EXAMPLE 1
GE P-39
SYLVANIA TYPE #151


FIG. 2

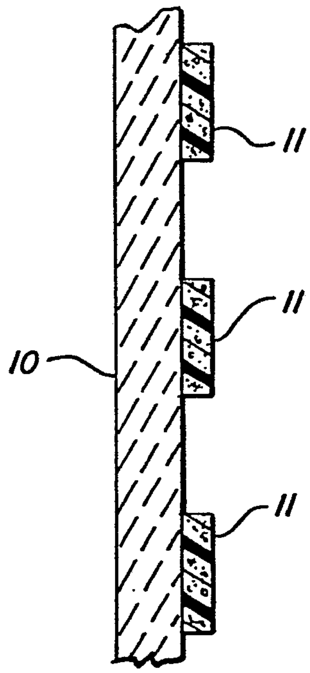

11
11
10
11


FIG. 1

European Patent Office

# EUROPEAN SEARCH REPORT

0044017

Application number
EP 81105257.0

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| | GB - A - 900 584 (DAVOHN)<br>* Page 1, lines 10-11; page 2, lines 8-16, 75-79, 122-130 *<br>-- | 1,5 | C 09 K 11/42 |
| | US - A - 2 697 077 (SMITH)<br>* Column 1, lines 54-56, 61-63, 76-77; Column 2, line 1; claim 1 *<br>-- | 1,5 | |
| | US - A - 2 977 321 (MC CREARY)<br>* Column 1, lines 19-25; column 2, lines 9-11 *<br>-- | 1,5 | TECHNICAL FIELDS SEARCHED (Int. Cl.) |
| | GB - A - 737 879 (SYLVANIA)<br>* Page 3, claim 1; table 3, line 30 *<br>-- | 1,5 | C 09 K 11/00<br>H 01 J 1/00<br>H 01 J 29/00 |
| D,A | JOURNAL OF THE ELECTROCHEMICAL SOCIETY, Vol.127, No.2, February 1980, Philadelphia<br>W. LEHMANN "Cathodoluminescence of $(Zn+Mg)_3(PO_4)_2$: $Mn^{2+}$ "<br>pages 503-505<br>* Page 503, column 2, lines 12, 33; page 504, column 2, line 1 *<br>-- | 1 | CATEGORY OF CITED DOCUMENTS |
| D,A | JOURNAL OF THE ELECTROCHEMICAL SOCIETY, Vol.106, No.11, November 1959, Philadelphia<br>J.F. SARVER et al. "Phase Equilibria and Manganese-Activated Fluorescence in the System $Zn_3(PO_4)_2$-$Mg_3(PO_4)_2$ "<br>pages 960-963<br>* Page 960, abstract; page 963, column 2, lines 12-26 *<br>-- | 1 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 20-10-1981 | VAKIL |

European Patent Office

# EUROPEAN SEARCH REPORT

0044017

Application number
EP 81105257.0

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| D,A | THE JOURNAL OF PHYSICS AND CHEMISTRY OF SOLIDS, Vol.24, No.1, January 1963, London<br>C.CALVO "The Crystal Structure and Luminescence of γ-Zinc Orthophosphate"<br>pages 141-149<br>* Totality *<br>---- | 1 | |
| | | | TECHNICAL FIELDS SEARCHED (Int. Cl. 3) |